# EUROPEAN PATENT APPLICATION

(11) **EP 2 840 767 A1**
(43) Date of publication of application: **25.02.2015**
(21) Application number: 14178020.5
(22) Date of filing: 22.07.2014
(51) Int. Cl.: H04M 3/42

(54) **Speaker recognition and voice tagging for improved service**

(30) Priority: 22.07.2013 US 201361857190 P; 22.10.2013 US 201314060322
(71) Applicant: Nuance Communications, Inc., Burlington, MA 01803 (US)
(72) Inventor: Sharp, Robert Douglas, San Francisco, CA California 94117 (US)
(74) Representative: Suèr, Steven Johannes

(57) **Abstract**

A method of enabling speaker identification, the method comprising receiving an identifier, the identifier having a limited number of potential speakers associated with it, processing speech data received from a speaker, and when the speaker is recognized, tagging a speaker and displaying a speaker identity. The method further comprises, when the speaker is not recognized, prompting an associate to identify the speaker.

## Description

### BACKGROUND

In private banking with wealthy clients, knowledge is power. Wealth management banker/advisors are trained to ask everyone on a call to identify themselves; sometimes there are outside advisors on the other end of the phone with a client during a call. Over time, the best banker advisors learn to identify their client by voice, and to know their close associates who show up on calls by voice as well.

There is turnover in wealth management advisor/bankers, and each time a key advisor leaves, a new one must take over their clientele. This is a time when the customers are at risk, because the new associate lacks knowledge of the customer and their outside advisors that the old associate had.

### SUMMARY OF THE INVENTION

The present application relates to speaker recognition, and more particularly using voice tagging to enable provision of improved service.

### BRIEF DESCRIPTION OF THE FIGURES

The present invention is illustrated by way of example, and not by way of limitation, in the figures of the accompanying drawings and in which like reference numerals refer to similar elements and in which:
Figure 1 is a high level diagram of one embodiment of the system.
Figure 2 is a block diagram of one embodiment of the recognition and tagging system.
Figure 3 is an overview flowchart of one embodiment of the use of the recognition and tagging system.
Figure 4 is a flowchart of one embodiment of the initial adding of tagging data to the system.
Figure 5 is a flowchart of one embodiment of using recognition and tagging.
Figures 6A and 6B illustrate embodiments of a user interface.
Figure 7 is a block diagram of one embodiment of a computer system that may be used with the present invention.

### DETAILED DESCRIPTION

The present invention provides a mechanism for a party who is dealing with a small number of people in a primarily voice forum, to pinpoint the identity of people as the party is interacting with them. In subsequent interactions, the system utilizes speaker recognition to automatically identify and provide an identification tag for each of the people whose identity is known from the previous pinpointing. In one embodiment, the system provides a utility to enable correction of the automatic identification. For simplicity, the present application will refer to the party who provides the identification and receives the identity output data, as "an associate." In one embodiment, the person setting up the system to include the speaker's identity and the person to whom such an identity is displayed may not be the same. Note that although the term associate is used, this may refer to any person, company, or group, whether solo, associate, partner, or other. The term associate thus is not meant to relay a relative business position.

In one embodiment, the system provides a separate display, with each of the speakers is identified. In one embodiment, when available a photograph of the speaker is also provided. Additional data about the speaker may also be provided.

In one embodiment, the system may, in addition to identifying and displaying the identity of the speaker, provide permissions associated with the identity. For example, a particular person in the family may have authorization to invest up to, but no more than, $500,000 in any transaction, take out no more than $20K, etc. The system may display these "hidden permissions" once entered by the original associate. In one embodiment, these permissions may also be derived from other data available in connection with the account.

In one embodiment, the system utilizes the number called from, or an initial identification made by the associate, to utilize speaker recognition from a small set of potential speakers. This ensures high accuracy.

This system may be particularly useful for private banking, where individual relationships need to be maintained between the banker and the customers. Furthermore, knowing the customers' identities and their access and decision making level is vital. Because employees leave and take account expertise with them, providing automatic identification enables a new employee to step into the customer service role seamlessly. It may also be used in video conferencing, or other environments in which a small number of speakers may speak and having the identity of the speaker would be useful.

The following detailed description of embodiments of the invention make reference to the accompanying drawings in which like references indicate similar elements, showing by way of illustration specific embodiments of practicing the invention. Description of these embodiments is in sufficient detail to enable those skilled in the art to practice the invention. One skilled in the art understands that other embodiments may be utilized and that logical, mechanical, electrical, functional, and other changes maybe made without departing from the scope of the present invention. The following detailed description is, therefore, not to be taken in a limiting sense, and the scope of the present invention is defined only by the appended claims.

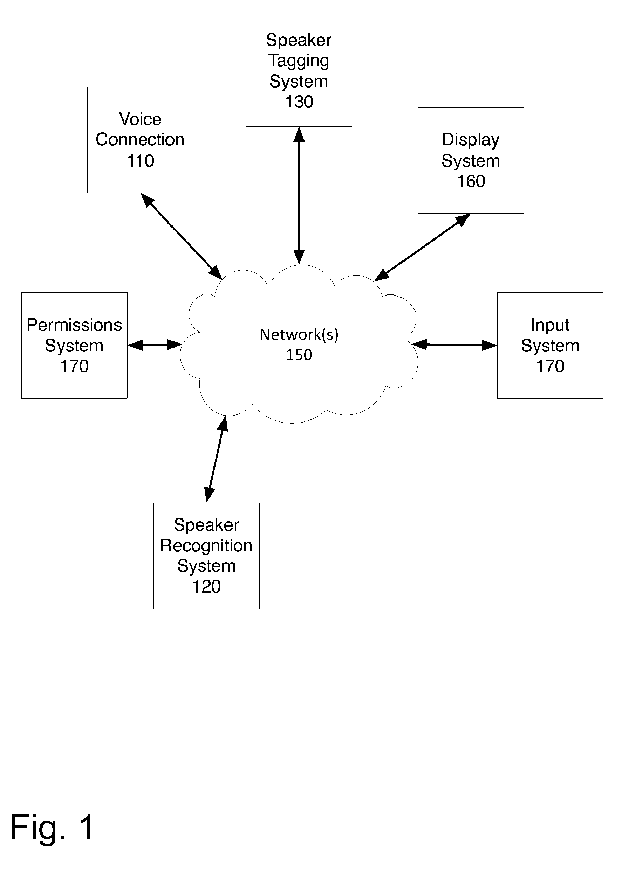

Figure 1 is a high level diagram of one embodiment of the system. The system in one embodiment includes a voice connection system 110. The voice connection system 110 may be a telephone connection, a voice-over-Internet (VoIP) connection, a microphone to record a locally present person's voice, or another method to obtain voice data. The voice connection 110 receives voice input. The voice input is fed into a speaker recognition system 120, which attempts to recognize the identity of the speaker based on the voice. In one embodiment, this is done using voice biometrics. In one embodiment, this is done using Voice Biometrics by Nuance Corporation®.

The speaker tagging system 130 tags the identified speaker with their identity, and in one embodiment with permissions obtained from the permissions system 170. The permissions system 170, in one embodiment, tracks the account access permissions associated with each individual. Account permissions specify what each individual may do, with an account, in one embodiment. For example, an adult child may be able to take some money from the account, but may not be able to alter the investment portfolio. Or an accountant may be able to instruct a stock to be sold, but may not purchase different stocks, etc. Of course, while the above examples are provided in the context of a banking application, similar permissions may be used in the context of another type of application, e.g. having or lacking the authority to make certain changes, or obtain certain benefits.

Display system 160 in one embodiment displays the identified individuals to the associate. In one embodiment, display system is a separate display, for example on a tablet computer, a telephone system, or mobile device. In another embodiment, display system 160 may be a part of an account display associated with the customer.

Input system 170 enables the associate taking the call to identify the speakers, if the system either does not have the speaker data or does not have enough data about the speaker to identify him or her automatically. In one embodiment, input system 170 also permits correction of erroneous automatic identification. In one embodiment, when the input system is used, the associate is prompted to enter a name and description for each individual who is not recognized. Other relevant data about the individual may also be entered. In one embodiment, such description may provide data that would enable improved personalization of the interaction between the associate and the individual.

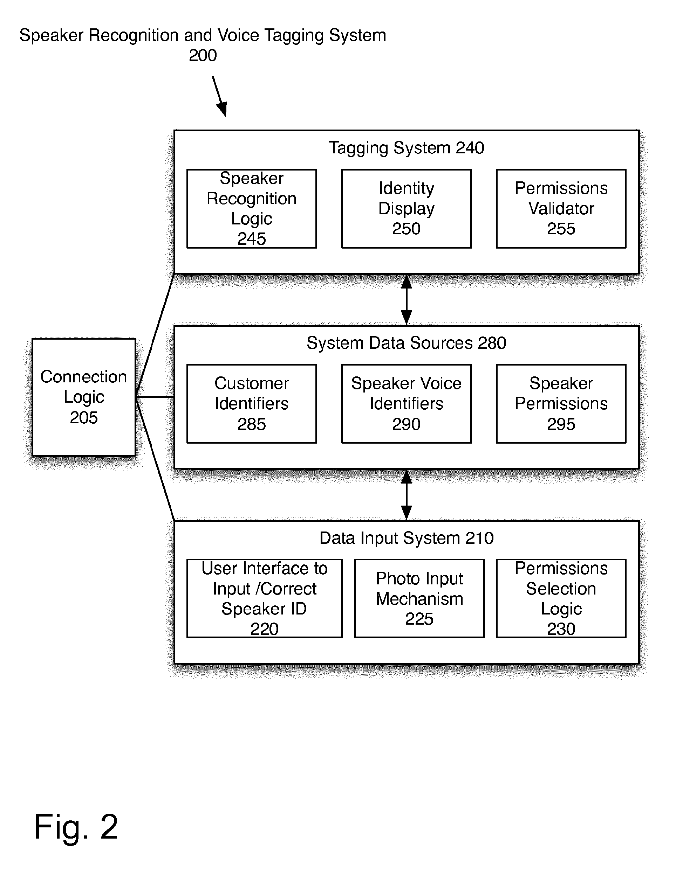

Figure 2 is a block diagram of one embodiment of the recognition and tagging system 200. The system includes connection logic 205 through which a voice data is received. In one embodiment, the connection logic 205 may be a telephone connection, a Voice over Internet protocol (VoIP) connection, a microphone, or any other means of capturing a speaker's voice.

In one embodiment, data from the connection logic 205 is used to determine the customer identifier, from among customer identifiers 285. The customer identifier 285 may include an originating telephone number, IP address, or other identifier. In one embodiment, the customer identifier 285 may be an account number or other identifier provided by the caller, whether spoken or entered using a keyboard. In one embodiment, a spoken customer identifier 285 may be recognized using a Speech Recognition Engine, such as the one provided by Nuance Communications®.

The system includes a tagging system 240, which includes speaker recognition logic 245, and identity display 250. The speaker recognition logic 245 takes the voice data from connection logic 205, and attempts to identify the speaker. In one embodiment, the speaker recognition logic 245 utilizes a list of speakers associated with the customer identifier, previously identified, and matches them against voice identifiers. The speaker voice identifier 295 may be a biometric voiceprint of the individuals associated with the account.

The identity display 250 shows the identified speaker(s). The identity display 250 may be a separate screen, a separate window, or a sub-portion of an account status window shown to the associate. In one embodiment, each speaker may have an associate permission, stored in speaker permissions 295. In one embodiment, identity display 250 also displays permissions associated with the speaker. In one embodiment, permissions validator 255 may validate transactions, based on the speaker's identity and the speaker permissions 295.

In one embodiment, data input system 210 enables the associate to add information into the system. The user interface 220 enables the associate to identify speakers, correct speaker identities, and enter other relevant data about the speakers. Photo input mechanism 225 in one embodiment enables the addition of a photograph. This can be useful in connecting real people to the speakers, and if the associate were to meet the speaker face-to-face.

Permissions selection logic 230 enables the setting of permissions associated with each potential speaker. In one embodiment, the permissions are defined by the primary account holder. In one embodiment, this maybe set up by the primary account holder directly online or in-person, or may be entered by the associate based on instructions by the primary account holder.

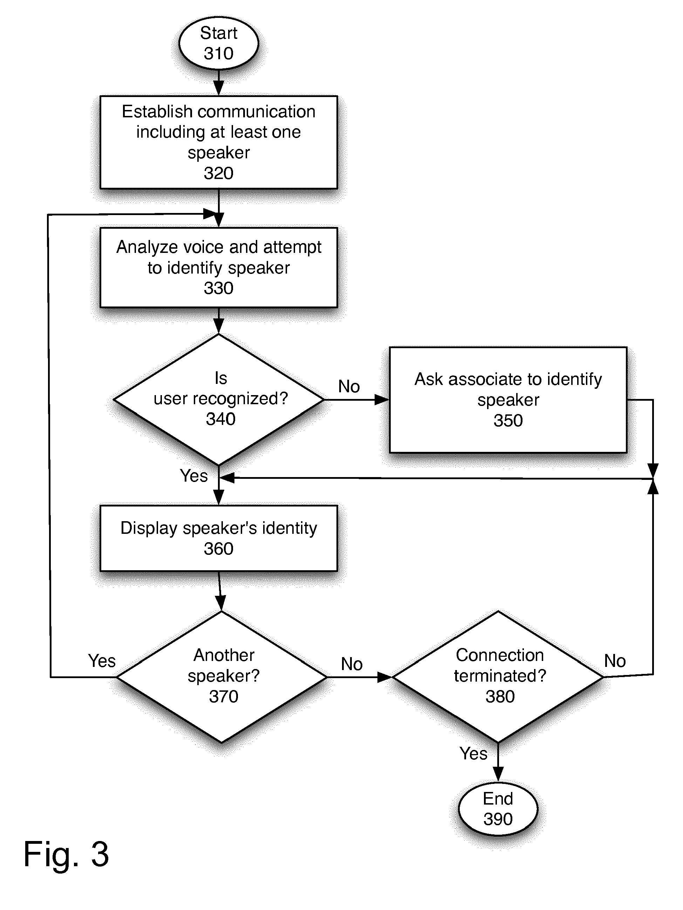

Figure 3 is an overview flowchart of one embodiment of the use of the recognition and tagging system. The process starts at block 310. In one embodiment, this process starts when a connection is established between an associate and a customer.

At block 320, communication is established between the associate and at least one speaker. The speaker(s) are customers, in one embodiment, or other participants in an interaction with the associate. In another embodiment, the speaker(s) may be co-workers or have a different relationship with the associate.

At block 330, the voice of the speakers is analyzed, and the speaker identification is attempted. Speaker identification is based on voice biometrics. In one embodiment, prior to attempting to identify an individual speaker, the system identifies the customer identifier. The voice biometric matching is done for speakers in the identified customer identifier.

At block 340, the process determines whether the user was recognized. If the user is not recognized, after a sufficient amount of conversation has occurred so that there is enough data for biometric identification, the process continues to block 350. At block 350, the associate is asked to identify the speaker. In one embodiment, the identification may include the name, relationship/position, and other known information about the speaker. The process then returns to block 360. If the user is recognized, at block 340, the process continues directly to 360.

At block 360, the identity of the speaker is displayed. In one embodiment, the display is on a separate screen or separate window on the same display. In another embodiment, the display is part of the display associated with account data or other information presented to the associate.

At block 370, the process determines whether there is another speaker to identify. If so, the process returns to block 330, to analyze the voice of the additional speaker. If there are no other speakers to identify, the process determines at block 380 whether the connection has been terminated. If not; the process returns to block 360, and the speaker's identity continues to be displayed. When the connection is terminated, the process at block 390. In one embodiment, once multiple speakers are identified, all of the individuals who are in the meeting/call are shown, and the current speaker is highlighted.

Although this process is displayed as a flowchart, one of skill in the art would understand that the order of execution may be different from that shown. One of ordinary skill in the art will recognize that the process is a conceptual representation of the operations used to enable user identification and tagging. The specific operations of the process may not be performed in the exact order shown and described. For example, the system may run a separate track for "recognizing speakers" and "displaying speaker identity" and determining whether "the connection terminated." The specific operations may not be performed in one continuous series of operations, and different specific operations may be performed in different embodiments. Furthermore, the process could be implemented using several sub-processes, or as part of a larger macro process. For instance, in some embodiments, the process is performed by one or more software applications that execute on one or more computers.

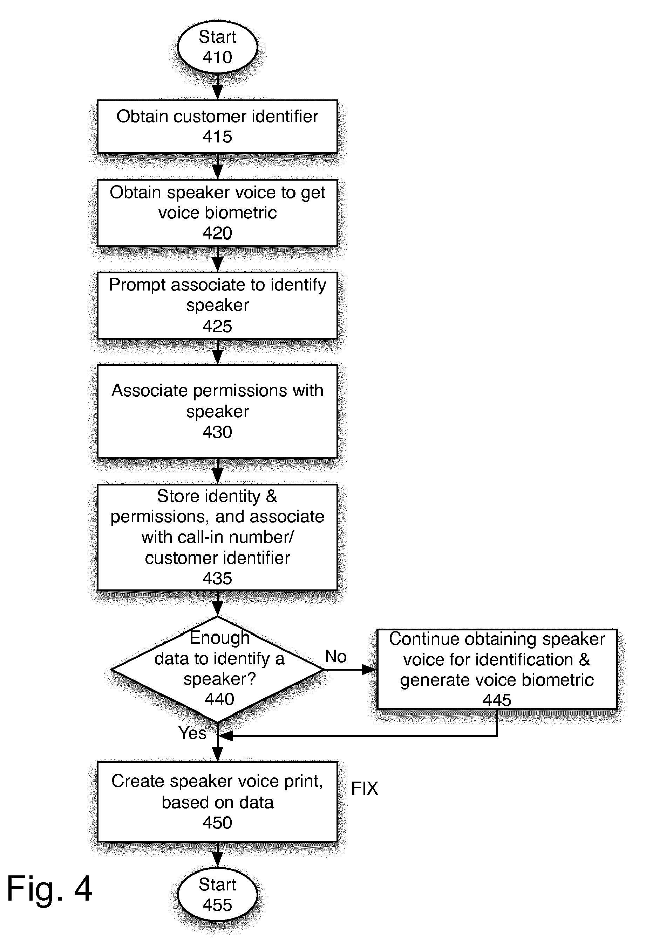

Figure 4 is a flowchart of one embodiment of the initial addition of speaker identity data to the system. The process starts at block 410. At block 415, in one embodiment, the system obtains a customer identifier. The customer identifier, in the context of a banking application for example, may be the account number, name, or other type of unique identifier. The customer identifier may be automatically obtained based on a caller number, provided account number, etc. In one embodiment, customer identifier may be entered by an associate.

The customer identifier, in the context of a conference, may be the conference name that provides membership data. In one embodiment, this process is used to reduce the pool of potential speakers to a small group, such as ten to twenty individuals. This enables fast biometric identification since the comparison set is limited. In one embodiment, in obtaining the customer identifier, the potential speakers are identified.

At block 420, the speaker voice is used to attempt to obtain a voice biometric. In one embodiment, the speaker's voice is recorded temporarily for identification, and then is deleted to maintain privacy. In one embodiment, the speaker's voice may be recorded for other purposes by a separate system, and provided to this system for analysis. In one embodiment, the speaker's voice is analyzed sufficiently long to provide a biometric voice pattern, which enables recognition of a speaker regardless of the words used.

At block 425, the associate is prompted to identify the speaker. The identification may include the speaker's name, relationship to the primary account holder, description, and other relevant information about the speaker. In one embodiment, additional data may be added that would be helpful in the relationship between the associate and the customer.

At block 430, in one embodiment, permissions are with the speaker. In one embodiment, this may be based on permissions provided by a primary account holder. In one embodiment, this data is requested when the account is established initially. In one embodiment, the permissions may be imported from another system, such as the account system. In another embodiment, the permissions may be entered by the associate based on data known to the associate.

At block 435, the identity and permissions are stored. In one embodiment, the identity and permissions, including the voice print data, are stored and associated with the customer identifier. In one embodiment, if it is not already associated, the caller's number may also be associated with the customer identifier.

At block 440, the process determines whether there is enough data to identify each speaker. If not, the system continues to obtain the speaker voices for identification, and generates a voice biometric pattern based on the analysis, at block 445. A voice biometric pattern is a "voiceprint" that reduces the speaker's voice to an abstract set of factors that are used to identify a user. Various methods of obtaining voiceprints are known in the art. The process then continues to block 450.

If there is enough data to identify the speaker, the process continues directly to block 450. At block 450, in one embodiment, the speaker's voiceprint is stored, associated with the customer identifier.

In one embodiment, the voiceprint is continuously updated with the new data. In one embodiment, the update ensures that the voiceprint continues to match the identified user. In one embodiment, whenever there is an interaction with a particular speaker, the voiceprint associated with the speaker is updated taking into account the previously used voiceprint. In one embodiment, the voiceprint is adjusted to ensure that the voice is recognized as the speaker ages, or otherwise changes over time. The process then ends at block 455.

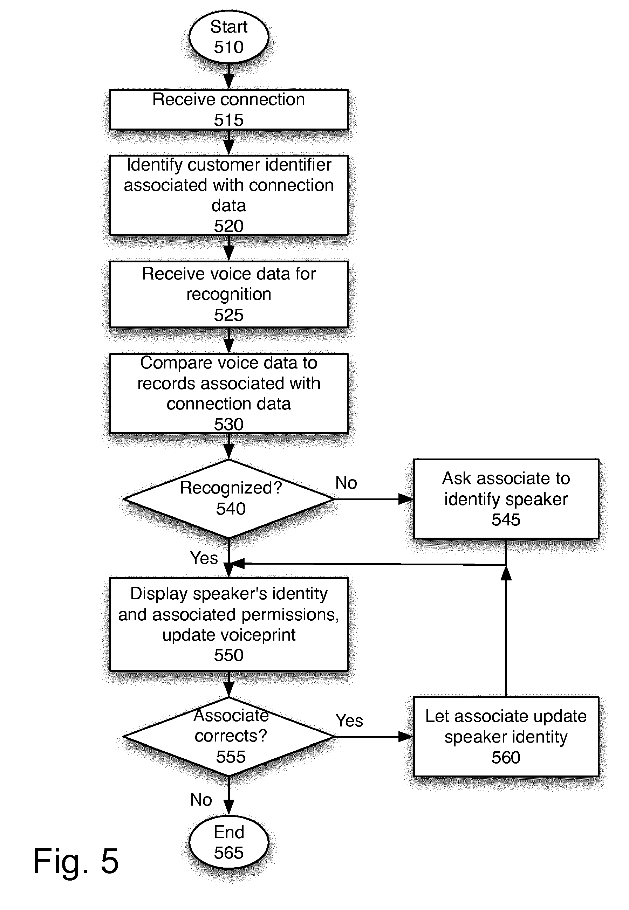

Figure 5 is a flowchart of one embodiment of using recognition and identification. The process starts at block 510. In one embodiment, this process is initiated when an associate receives a call from one or more speakers. In one embodiment, the process is initiated manually by the associate. In another embodiment, this process is automatically initiated when a connection is received.

At block 515, a connection is received. In one embodiment, the connection is a telephone call from a customer to an associate. In another embodiment, the connection may be a VoIP call, or attendance at a conference.

At block 520, the customer identifier linked to the connection data is identified. In one embodiment, this identification is made based on the telephone number from which the call is received. In another embodiment, the identification is made manually by the associate. In another embodiment, the identification is based on an account number or similar identifier entered by the caller or the associate. In another embodiment, the number that was called is used to identify the customer, e.g. a customer may have a unique number to dial.

At block 525, voice data is received for recognition. In one embodiment, this voice data may be received during the initial portion of an interaction, e.g., when the caller says hello and greets the associate.

At block 530, the voice data is compared to the records associated with the client. In one embodiment, this is continuously done as the caller interacts with the associate. In one embodiment, this is done until there is a sufficient amount of data to define a unique voiceprint.

At block 540, the process determines whether the voice has been recognized. If not, the system asks the associate to identify the speaker. In one embodiment, the associate inputs the speaker's identity through a user interface. The process then continues to block 550. If the voice was recognized, the process continues to block 550.

At block 550, the speaker's identity and associated permission are displayed. In one embodiment, the voiceprint associated with the speaker is also updated.

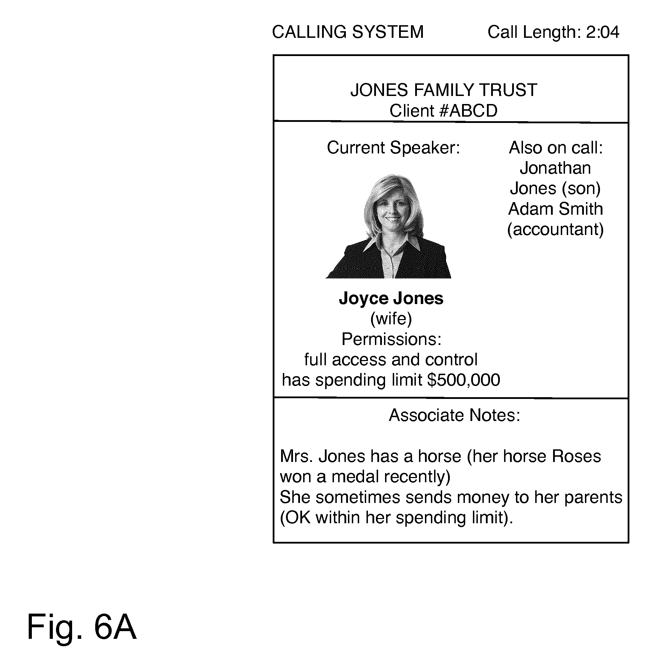

Figure 6A shows of one embodiment of a user interface display. In this example, there is a separate display screen or display device, showing the current speaker. In one embodiment, the length of the current call is also shown. In one embodiment, the customer identifier is shown (Jones Family Trust, Client #ABCD), and the current speaker is identified. In this example, the speaker is also identified with a photo. Her name and relationship to the account are also shown, in this example.

In one embodiment, the permissions associated with her are displayed as well. In one embodiment, the other identified speakers on the call are also listed -- Jonathan Jones (son) and Adam Smith (accountant) in the example shown. This enables the associate to easily refer back to the other prior speakers. The system may, in one embodiment, display multiple speakers who are speaking concurrently, once the speakers have been identified. In one embodiment, there is the option for the associate to enter his or her own notes. The notes may be regarding the speaker (e.g. regarding Mrs. Jones' horse and past activities, in the example shown.)

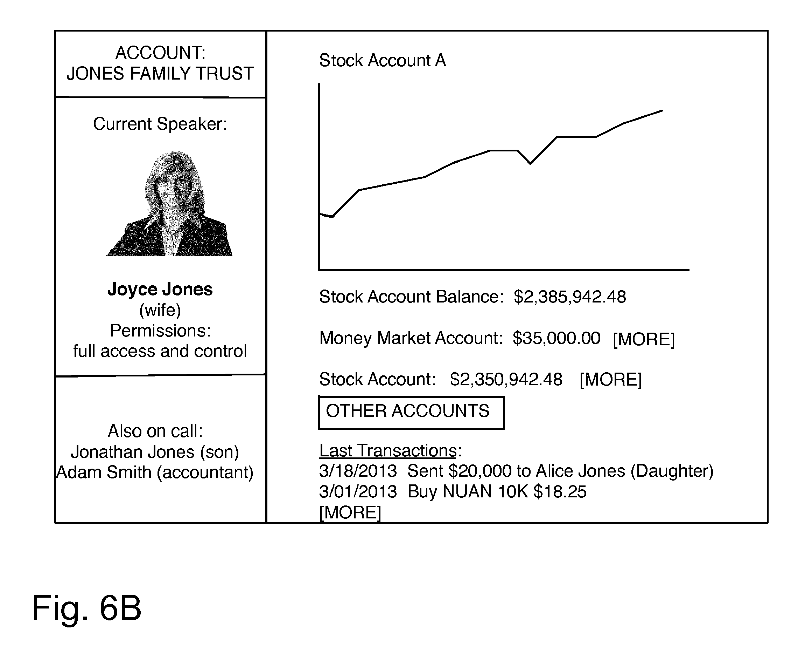

Figure 6B shows another embodiment of the user interface display. In that embodiment, the speaker window is shown as part of an overall account management window, which shows some account data, and a side bar including the user's identity data. In one embodiment, the system may also provide information about the past actions taken by the current speaker, as shown in Figure 6B. Of course, these two configurations are merely exemplary. Any other format to communicate speaker identity data may be used.

Returning to Figure 5, at block 555, the process determines whether the associate has indicated a need to correct the identified speaker identity. If so, at block 560 the associate is permitted to enter the correct speaker identity. The process then returns to block 550, to display the speaker's identity, and update the speaker's voiceprint. In one embodiment, if the speaker is not recognized, or the associate updates the speaker's identity, the voiceprint is updated immediately. If the speaker is recognized, the system compares the new voiceprint to the existing voiceprint, and updates if there are noticeable differences. The process then ends at block 565. If no correction is needed, the process continues directly to block 565 and ends.

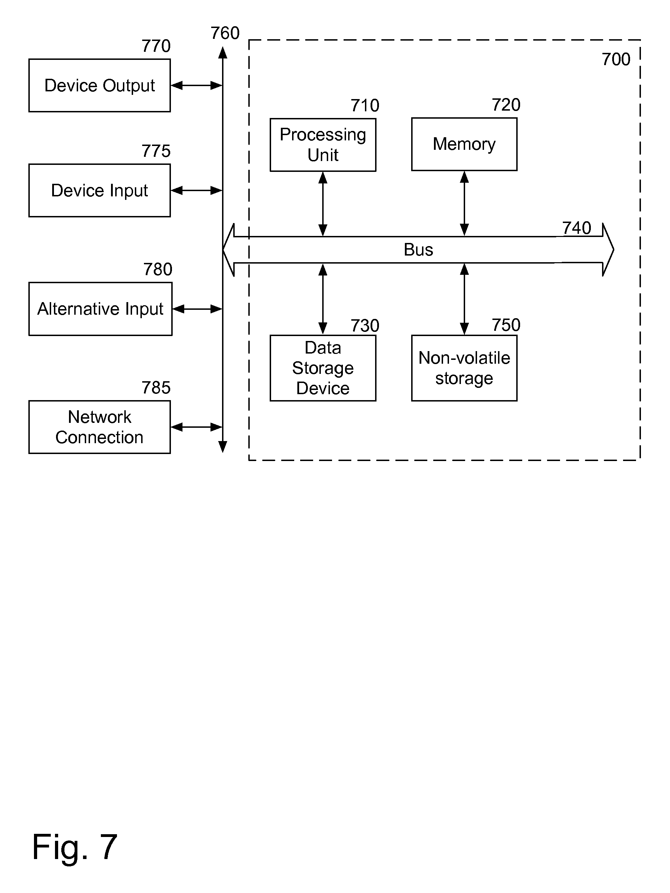

Figure 7 is a block diagram of a particular machine that may be used with the present invention. It will be apparent to those of ordinary skill in the art, however that other alternative systems of various system architectures may also be used.

The data processing system illustrated in Figure 7 includes a bus or other internal communication means 740 for communicating information, and a processing unit 710 coupled to the bus 740 for processing information. The processing unit 710 may be a central processing unit (CPU), a digital signal processor (DSP), or another type of processing unit 710.

The system further includes, in one embodiment, a random access memory (RAM) or other volatile storage device 720 (referred to as memory), coupled to bus 740 for storing information and instructions to be executed by processor 710. Main memory 720 may also be used for storing temporary variables or other intermediate information during execution of instructions by processing unit 710.

The system also comprises in one embodiment a read only memory (ROM) 750 and/or static storage device 750 coupled to bus 740 for storing static information and instructions for processor 710. In one embodiment, the system also includes a data storage device 730 such as a magnetic disk or optical disk and its corresponding disk drive, or Flash memory or other storage which is capable of storing data when no power is supplied to the system. Data storage device 730 in one embodiment is coupled to bus 740 for storing information and instructions.

The system may further be coupled to an output device 770, such as a cathode ray tube (CRT) or a liquid crystal display (LCD) coupled to bus 740 through bus 760 for outputting information. The output device 770 may be a visual output device, an audio output device, and/or tactile output device (e.g. vibrations, etc.)

An input device 775 may be coupled to the bus 760. The input device 775 may be an alphanumeric input device, such as a keyboard including alphanumeric and other keys, for enabling the associate to communicate information and command selections to processing unit 710. An additional user input device 780 may further be included. One such user input device 780 is cursor control device 780, such as a mouse, a trackball, stylus, cursor direction keys, or touch screen, may be coupled to bus 740 through bus 760 for communicating direction information and command selections to processing unit 710, and for controlling movement on display device 770.

Another device, which may optionally be coupled to computer system 700, is a network device 785 for accessing other nodes of a distributed system via a network. The communication device 785 may include any of a number of commercially available networking peripheral devices such as those used for coupling to an Ethernet, token ring, Internet, or wide area network, personal area network, wireless network or other method of accessing other devices. The communication device 785 may further be a null-modem connection, or any other mechanism that provides connectivity between the computer system 700 and the outside world.

Note that any or all of the components of this system illustrated in Figure 7 and associated hardware may be used in various embodiments of the present invention.

It will be appreciated by those of ordinary skill in the art that the particular machine that embodies the present invention may be configured in various ways according to the particular implementation. The control logic or software implementing the present invention can be stored in main memory 720, mass storage device 730, or other storage medium locally or remotely accessible to processor 710.

It will be apparent to those of ordinary skill in the art that the system, method, and process described herein can be implemented as software stored in main memory 720 or read only memory 750 and executed by processor 710. This control logic or software may also be resident on an article of manufacture comprising a computer readable medium having computer readable program code embodied therein and being readable by the mass storage device 730 and for causing the processor 710 to operate in accordance with the methods and teachings herein.

The present invention may also be embodied in a handheld or portable device containing a subset of the computer hardware components described above. For example, the handheld device may be configured to contain only the bus 740, the processor 710, and memory 750 and/or 720.

The handheld device may be configured to include a set of buttons or input signaling components with which a user may select from a set of available options. These could be considered input device #1 775 or input device #2 780. The handheld device may also be configured to include an output device 770 such as a liquid crystal display (LCD) or display element matrix for displaying information to a user of the handheld device. Conventional methods may be used to implement such a handheld device. The implementation of the present invention for such a device would be apparent to one of ordinary skill in the art given the disclosure of the present invention as provided herein.

The present invention may also be embodied in a special purpose appliance including a subset of the computer hardware components described above, such as a kiosk or a vehicle. For example, the appliance may include a processing unit 710, a data storage device 730, a bus 740, and memory 720, and no input/output mechanisms, or only rudimentary communications mechanisms, such as a small touch-screen that permits the user to communicate in a basic manner with the device. In general, the more special-purpose the device is, the fewer of the elements need be present for the device to function. In some devices, communications with the associate may be through a touch-based screen, or similar mechanism. In one embodiment, the device may not provide any direct input/output signals, but may be configured and accessed through a website or other network-based connection through network device 785.

It will be appreciated by those of ordinary skill in the art that any configuration of the particular machine implemented as the computer system may be used according to the particular implementation. The control logic or software implementing the present invention can be stored on any machine-readable medium locally or remotely accessible to processor 710. A machine-readable medium includes any mechanism for storing information in a form readable by a machine (e.g. a computer). For example, a machine readable medium includes read-only memory (ROM), random access memory (RAM), magnetic disk storage media, optical storage media, flash memory devices, or other storage media which may be used for temporary or permanent data storage. In one embodiment, the control logic may be implemented as transmittable data, such as electrical, optical, acoustical or other forms of propagated signals (e.g. carrier waves, infrared signals, digital signals, etc.).

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative rather than a restrictive sense.

## Claims

1. A method of enabling speaker identification, the method comprising:
receiving an identifier, the identifier having a limited number of potential speakers associated with it;
processing speech data received from a speaker; and
when the speaker is recognized, tagging a speaker and displaying a speaker identity; and
when the speaker is not recognized, prompting an associate to identify the speaker.

2. The method of claim 1, further comprising:
when the speaker is recognized, displaying permissions associated with the speaker.

3. The method of claim 1 or 2, further comprising:
automatically validating a transaction initiated by the speaker, based permissions associated with the speaker.

4. The method of any one of claims 1 to 3, further comprising:
providing a user interface feature to enable the associate to add additional notes to the speaker.

5. The method of any one of claims 1 to 4, further comprising:
enabling correction of the speaker identified automatically by the system.

6. The method of claim 5, further comprising:
updating the voiceprint associated with the speaker, based on the correction by the associate.

7. A speaker identification and voice tagging system enabling speaker identification, the system comprising:
a connection system to receive an identifier, the identifier having a limited number of potential speakers associated with it;
a speaker recognition logic to process speech data received from a speaker, and recognizing the speaker;
a tagging display tag a speaker and display a speaker identity on a display; and
a user interface to, when the speaker is not recognized, prompt an associate to identify the speaker.

8. The system of claim 7, and further comprising any of:
a) the tagging display to show permissions associated with the speaker when the speaker is recognized; or
b) a permissions validator to automatically validate a transaction initiated by the speaker, based on permissions associated with the speaker; or
c) the user interface further permitting entry of additional notes, and associating the notes with the speaker; or
d) the user interface to permit correction of the speaker identification made by the speaker recognition logic; in which case optionally further comprising:
speaker voice identifiers to update the voiceprint data associated with the speaker, based on the correction.

9. A method to enable an associate to provide improved services to a customer, the method comprising:
for each individual associated with a customer account:
obtaining voiceprint data;
prompting a first associate to provide a speaker identity;
storing the voiceprint data and the speaker identity, associated with the customer account;
storing the voiceprint data associated with the speaker, in connection with the customer account;
in a subsequent communication between an individual associated with the customer account and the associate:
monitoring the individual's voice;
comparing the individual's voice to the voiceprint data for speakers associated with the customer account;
when the speaker is identified, displaying an identity of the
speaker to the associate, such that the associate can provide personalized service to the speaker;
when the speaker is not identified, prompting the associate to enter the speaker identity.

10. The method of claim 9, and further comprising any of:
a) retrieving permissions associated with the identified speaker, and displaying permissions associated with the speaker to the associate; or
b) automatically validating a transaction initiated by the identified speaker, based permissions associated with the speaker; or
c) providing a user interface feature to enable the associate to add additional notes to the speaker; or
d) enabling correction of the speaker by the associate, when the identification is incorrect; in which case optionally further comprising:
updating the voiceprint associated with the speaker, based on the correction by the associate.

11. The method of claim 9 or 10, further comprising:
updating the voiceprint associated with the speaker, based on new data.

12. The method of claim 9, 10 or 11, further comprising:
displaying along with the identity of the speaker, one or more of: a speaker relationship to the customer account, permissions associated with the speaker, notes about the speaker entered by one or more associates, past transactions made by the speaker.
